# FASCICULE DE BREVET EUROPEEN

(11) **EP 3 204 618 B1**
(45) Date de publication et mention de la délivrance du brevet: **05.09.2018**
(21) Numéro de dépôt: 15788152.5
(22) Date de dépôt: 08.10.2015
(51) Int. Cl.: F01D 21/00, F02C 9/00

(54) **PROCÉDÉ ET DISPOSITIF DE NOTIFICATION D'UNE AUTORISATION D'ARRÊT COMPLET D'UN MOTEUR À TURBINE À GAZ D'AÉRONEF**
VERFAHREN UND VORRICHTUNG ZUR BENACHRICHTIGUNG EINER AUTORISIERUNG ZUM VOLLSTÄNDIGEN ABSCHALTEN EINES FLUGZEUGGASTURBINENMOTORS
METHOD AND DEVICE FOR NOTIFYING AN AUTHORIZATION TO COMPLETELY SHUT DOWN AN AIRCRAFT GAS TURBINE ENGINE

(30) Priorité: 10.10.2014 FR 1459756
(43) Date de publication de la demande: 16.08.2017
(73) Titulaire: Safran Helicopter Engines, 64510 Bordes (FR)
(72) Inventeur: DESCUBES, Olivier Pierre, F-64800 Nay (FR); PY, Jean-Michel Pierre Claude, F-64800 Pardies Pietat (FR)
(74) Mandataire: Healy, Erwan
(86) Numéro de dépôt international: PCT/FR2015/052703
(87) Numéro de publication internationale: WO 2016/055738

(56) Documents cités:
- EP-A1- 0 093 486
- EP-A1- 1 605 148
- EP-A1- 2 532 840
- WO-A1-99/54610
- FR-A1- 2 953 562
- RU-A- 2008 118 671
- US-B1- 6 886 324

## Description

### Arrière-plan de l'invention

La présente invention se rapporte au domaine général des moteurs à turbine à gaz d'aéronef pour lesquels il est nécessaire de respecter une durée de ralenti au sol avant de commander un arrêt complet du moteur.

Dans le domaine aéronautique, il est courant d'indiquer dans les manuels d'utilisation destinés aux pilotes d'un aéronef de respecter une certaine durée à un régime de fonctionnement du moteur dit de « ralenti » avant de commander un arrêt complet du moteur. Cette durée dite de « stabilisation du moteur » est principalement liée au risque que l'huile ou le carburant du moteur ne se cokéfie au niveau des parties chaudes du moteur (par exemple au niveau des injecteurs de carburant dans la chambre de combustion du moteur). Pour éviter une cokéfaction trop importante de ces parties chaudes du moteur, il est ainsi recommandé de laisser le moteur tourner à un régime de ralenti pendant une certaine durée avant de le couper complètement.

La durée de cette phase de stabilisation du moteur est généralement prédéfinie en fonction du type de moteur et est typiquement comprise entre 30 secondes et 2 minutes.

Or, imposer une durée de stabilisation forfaitaire présente de nombreux inconvénients. En effet, si l'on choisit de couvrir la pire situation thermique possible pour le moteur, la durée de stabilisation est nécessairement élevée, ce qui impose un temps d'attente pénalisant pour l'équipage de l'aéronef avant de pouvoir arrêter complètement le moteur. En revanche, si l'on choisit de minimiser cette contrainte pour l'équipage, la durée de stabilisation doit être la plus courte possible, ce qui peut exposer le moteur à des phénomènes importants de cokéfaction entraînant à terme des coûts et durées de maintenance importants.

Il existe donc un besoin d'un procédé de détermination d'une durée de stabilisation au ralenti d'un moteur à turbine à gaz d'aéronef avant son arrêt complet qui ne présente pas les inconvénients précités liés à l'établissement d'une durée forfaitaire de stabilisation.

Le document EP2532840 divulgue un dispositif d'aide à la surveillance d'une turbomachine d'aéronef selon l'art antérieur.

### Objet et résumé de l'invention

La présente invention répond notamment à ce besoin en proposant un procédé de notification d'une autorisation d'arrêt complet d'un moteur à turbine à gaz d'aéronef, comprenant, suite à la détection d'un passage du moteur à un régime de ralenti :
(a) une étape d'évaluation, à partir d'une valeur d'un premier paramètre de fonctionnement du moteur, d'une valeur d'un second paramètre caractérisant un comportement thermique d'une pièce du moteur sujette à cokéfaction, cette évaluation étant réalisée au moyen d'un modèle de comportement thermique de ladite pièce ;
(b) une étape de comparaison de la valeur du second paramètre avec une valeur de seuil prédéfinie correspondant à une valeur du second paramètre n'engendrant pas de cokéfaction de ladite pièce ; et
(c) une étape de notification d'autorisation d'arrêt complet du moteur si la valeur du second paramètre est inférieure à la valeur de seuil prédéfinie,
les étapes (a) à (c) étant réitérées sinon.

Corrélativement, l'invention vise aussi un moteur à turbine à gaz d'aéronef comprenant un dispositif de notification d'une autorisation d'arrêt complet d'un moteur à turbine à gaz d'aéronef, comprenant :
des moyens d'évaluation, à partir d'une valeur d'un premier paramètre de fonctionnement du moteur, d'une valeur d'un second paramètre caractérisant un comportement thermique d'une pièce du moteur sujette à cokéfaction, cette évaluation étant réalisée au moyen d'un modèle de comportement thermique de ladite pièce ;
des moyens de comparaison de la valeur du second paramètre avec une valeur de seuil prédéfinie correspondant à une valeur du second paramètre n'engendrant pas de cokéfaction de ladite pièce ; et
des moyens de notification d'autorisation d'arrêt complet du moteur.

L'invention propose ainsi un mécanisme judicieux qui permet d'adapter la durée de stabilisation du moteur en fonction de l'exploitation effective de celui-ci. A partir d'un modèle de comportement thermique d'une pièce du moteur sujette à la cokéfaction, et grâce à la simple connaissance d'un paramètre de fonctionnement du moteur, ce mécanisme, qui peut être intégré directement dans le calculateur électronique du moteur, permet ainsi de déterminer de façon efficace la durée nécessaire que le pilote devra respecter avant d'arrêter complètement le moteur. Ce mécanisme est simple de mise en oeuvre (il ne nécessite pas d'outils ou d'instruments de mesure particuliers, le paramètre de fonctionnement qu'il utilise étant un paramètre déjà surveillé pour d'autres fonctionnalités de surveillance du moteur) et permet de calculer au plus juste la durée nécessaire pour éviter toute cokéfaction trop importante des parties chaudes du moteur.

En évitant tout risque de cokéfaction trop importante, le mécanisme selon l'invention permet ainsi de réduire les coûts et la durée de maintenance du moteur. Par ailleurs, ce mécanisme permet d'optimiser les procédures de pilotage et de vol en rendant cette phase de stabilisation du moteur plus simple pour le pilote. Enfin, il est possible, avec un tel mécanisme, d'anticiper les opérations de maintenance en fonction du non respect des durées de stabilisation au sol et de la comptabilisation du nombre de phases de stabilisation dont la durée aura été élevée.

De façon avantageuse, l'évaluation d'une valeur du second paramètre peut comprendre le calcul d'une valeur moyenne du premier paramètre de fonctionnement du moteur sur une fenêtre temporelle glissante.

De façon avantageuse également, le procédé peut comprendre en outre le déclenchement d'un chronomètre suite à la détection d'un passage du moteur à un régime de ralenti, et la notification d'autorisation d'arrêt complet du moteur lorsque le temps écoulé depuis le déclenchement du chronomètre dépasse une durée de seuil prédéterminée.

Typiquement, on choisira comme durée de seuil prédéterminée, une durée dont on sait par expérience qu'elle couvre la pire situation thermique possible pour le moteur. Par exemple, cette durée de seuil peut être égale à 2mn. Ainsi, cette étape additionnelle permet de réduire la durée de stabilisation si la valeur moyenne du paramètre de fonctionnement du moteur met du temps à redescendre pour passer sous la valeur de seuil prédéfinie.

Le premier paramètre peut être choisi parmi les paramètres de fonctionnement du moteur suivants : une température mesurée dans un canal d'écoulement d'un flux gazeux entre deux étages de turbine, une température ambiante mesurée à l'entrée du moteur, une température d'huile du moteur, une température de carburant du moteur, et un régime de fonctionnement du moteur.

De plus, la notification d'autorisation d'arrêt complet du moteur peut consister en un affichage visuel indiquant au pilote une ou plusieurs des informations suivantes : autorisation d'arrêt complet du moteur, arrêt complet du moteur avec risque de cokéfaction, affichage d'une durée d'attente nécessaire préalablement estimée avant autorisation d'arrêt complet du moteur.

Le passage du moteur à un régime de ralenti peut être détecté suite à l'actionnement par le pilote de l'aéronef d'un commutateur ou suite à la détection d'un régime de fonctionnement du moteur qui correspond à un régime de ralenti, ou d'un état thermique assimilé.

Dans un mode particulier de réalisation, les différentes étapes du procédé sont déterminées par des instructions de programmes d'ordinateurs.

En conséquence, l'invention vise aussi un programme d'ordinateur sur un support d'informations, ce programme étant susceptible d'être mis en oeuvre dans un dispositif de notification ou plus généralement dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, sous forme d'ordinogramme, les principales étapes d'un procédé de détermination d'une durée de stabilisation de ralenti selon l'invention ; et
- la figure 2 est un graphe montrant un exemple de mise en oeuvre du procédé selon l'invention.

### Description détaillée de l'invention

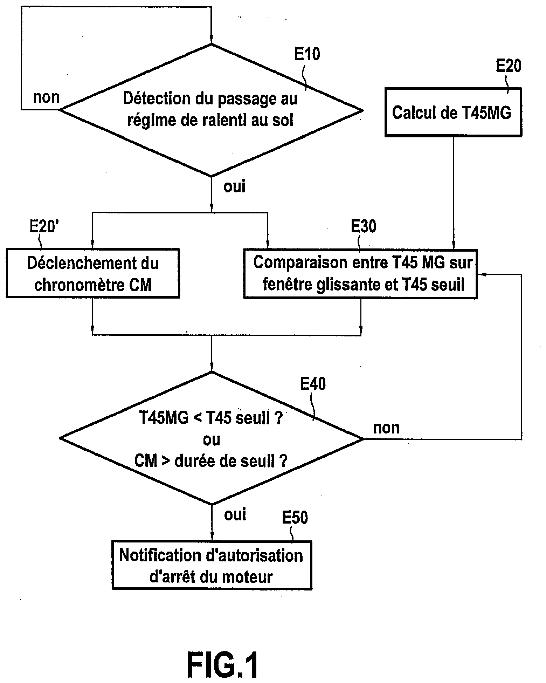

La figure 1 représente, sous forme d'ordinogramme, les principales étapes d'un procédé de notification d'une autorisation d'arrêt complet d'un moteur à turbine à gaz d'aéronef selon l'invention.

L'autorisation d'arrêt complet d'un moteur à turbine à gaz d'aéronef, par exemple d'un turboréacteur d'avion commercial, fait suite aux phases d'atterrissage et de roulage au sol d'un aéronef après un vol. Cette autorisation d'arrêt complet a pour but de faire respecter une certaine durée de fonctionnement au régime ralenti avant de commander un arrêt complet du moteur afin d'éviter tout risque de cokéfaction d'huile ou de carburant des parties chaudes du moteur, telles que par exemple les injecteurs de carburant dans la chambre de combustion.

Le procédé selon l'invention a pour objet de définir une durée de fonctionnement au ralenti avant arrêt complet du moteur qui est variable en fonction de certains paramètres de fonctionnement du moteur caractérisant un comportement thermique d'une pièce du moteur sujette à cokéfaction.

A cet effet, comme représenté sur la figure 1, le procédé selon l'invention comprend une première étape E10 qui consiste à détecter si le moteur est passé au régime de ralenti.

Ce passage au régime de ralenti peut être détecté suite à l'actionnement par le pilote de l'aéronef d'un commutateur ou suite à la détection d'un régime de fonctionnement du moteur qui correspond à un régime de ralenti, une telle détection étant réalisable à partir de l'un des paramètres vus par le calculateur comme indication de pas collectif, de vitesse du générateur de gaz, de température en sortie de turbine, etc.

Une fois qu'il a été détecté que le moteur fonctionne au régime de ralenti, le procédé selon l'invention prévoit, au cours d'une étape E20, d'évaluer, à partir d'une valeur d'un premier paramètre de fonctionnement du moteur, une valeur d'un second paramètre caractérisant un comportement thermique d'une pièce du moteur sujette à cokéfaction.

La valeur du premier paramètre peut être calculée en continue ou sur un évènement indiquant que le moteur va être mis dans une condition d'arrêt.

Le premier paramètre de fonctionnement du moteur utilisé au cours de cette étape d'évaluation E20 correspond typiquement à une température mesurée dans le moteur au voisinage de la pièce sujette à cokéfaction.

Par exemple, ce premier paramètre de fonctionnement pourra être choisi parmi les paramètres suivants : une température mesurée dans un canal d'écoulement d'un flux gazeux entre deux étages de turbine (ci-après dénommée T45), une température ambiante mesurée à l'entrée du moteur, une température d'huile du moteur, une température de carburant du moteur, un régime de fonctionnement du moteur, etc.

Ces exemples ont pour avantage d'être des paramètres qui sont déjà surveillés au cours de la mission de l'aéronef. Typiquement, les valeurs mesurées pour ces paramètres sont envoyées en continu au cours de la mission au calculateur du dispositif de régulation du moteur pour y être analysées.

A partir d'un modèle de comportement thermique de la pièce pour laquelle le premier paramètre est mesuré, il est alors évalué une valeur d'un second paramètre caractérisant un comportement thermique de ladite pièce.

Ce modèle de comportement thermique est une fonction (également appelée opérateur intégral) qui permet, à partir d'une valeur d'entrée d'un paramètre de fonctionnement (telle qu'une température mesurée dans le moteur au voisinage de la pièce), de modéliser le comportement thermique de la pièce.

Dans un exemple de réalisation de l'invention appliqué dans lequel le premier paramètre de fonctionnement est la température T45 mesurée dans un canal d'écoulement d'un flux gazeux entre deux étages de turbine du moteur, le modèle de comportement thermique pourra être un calcul de la moyenne T45MG des valeurs de la température T45 mesurée sur une fenêtre temporelle glissante d'une durée prédéterminée (par exemple de l'ordre de quelques minutes).

L'étape d'évaluation E20 peut être réalisée au cours de l'ensemble de la mission, du démarrage à l'arrêt complet du moteur. Elle peut être effectuée au moyen d'un logiciel de calcul embarqué dans le calculateur du moteur et permet ainsi d'obtenir en continu une valeur pour le second paramètre caractérisant un comportement thermique de la pièce sujette à cokéfaction (dans l'exemple illustré : T45MG).

Parallèlement à cette étape d'évaluation E20, le procédé peut prévoir, à une étape E20', de déclencher un chronomètre CM à partir du moment où le passage du moteur à un régime de ralenti est détecté.

L'étape suivante E30 consiste à comparer la valeur du second paramètre obtenue à l'étape E20 (ici la moyenne T45MG) avec une valeur de seuil prédéfinie (ici T45seuil). Cette étape de comparaison est effectuée par un logiciel de calcul embarqué dans le calculateur du moteur.

La valeur de seuil T45seuil correspond à une valeur du second paramètre pour laquelle il a été préalablement établi qu'elle n'engendrait pas de cokéfaction de la pièce.

Cette valeur de seuil T45seuil est préalablement établie à partir d'un tableau multi-entrées (par exemple avec la température et la pression en entrée du moteur, la température de l'huile, la température du carburant, etc.) et en fonction des mesures du moteur au moment de la détection du passage du moteur à un régime de ralenti. Ce tableau est typiquement élaboré par retour d'expérience à partir de données issues de missions antérieures pour des moteurs de la même famille que celui en question.

A l'issue de cette étape de comparaison E30, s'il est établi, au cours d'une étape E40, que la valeur du second paramètre T45MG est inférieure à la valeur de seuil prédéfinie T45seuil, le calculateur du moteur notifie au pilote une autorisation d'arrêt complet du moteur (étape E50).

En revanche, si la valeur du second paramètre T45MG est supérieure à la valeur de seuil prédéfinie T45seuil, les étapes E30 et E40 sont répétées. En d'autres termes, si la valeur du second paramètre T45MG est supérieure à la valeur de seuil prédéfinie T45seuil, le calculateur du moteur va effectuer une nouvelle comparaison entre le calcul de la moyenne T45MG à partir des nouvelles valeurs de la température T45 mesurée sur la fenêtre temporelle glissante et comparer cette valeur avec la valeur de seuil prédéfinie (T45seuil), cette dernière pouvant varier en fonction du temps.

Ce processus d'évaluation de la moyenne T45MG et de comparaison de cette dernière avec la valeur de seuil prédéfinie T45seuil se réitère jusqu'à ce que la valeur de la moyenne T45MG devienne inférieure à la valeur de seuil prédéfinie T45seuil, auquel cas le calculateur notifie au pilote une autorisation d'arrêt complet du moteur.

Par ailleurs, lorsqu'un chronomètre CM a été déclenché au cours de l'étape E20', le procédé prévoit, au cours de l'étape E40, de vérifier si le temps écoulé depuis le déclenchement du chronomètre a dépassé une durée de seuil prédéterminée (typiquement de l'ordre de 2 minutes) auquel le calculateur du moteur notifie au pilote une autorisation d'arrêt complet du moteur (étape E50). En revanche, si le temps écoulé est inférieur à la durée de seuil prédéterminée, les étapes E20 à E40 sont répétées comme décrit précédemment.

L'étape E50 de notification au pilote d'une autorisation d'arrêt complet du moteur peut prendre plusieurs formes. Elle peut notamment consister en un affichage visuel indiquant au pilote l'une ou plusieurs des informations suivantes : autorisation d'arrêt complet du moteur, arrêt complet du moteur avec risque de cokéfaction (le risque est signalé tant que la stabilisation avant arrêt n'est pas suffisante), affichage d'une durée d'attente nécessaire préalablement estimée avant autorisation d'arrêt complet du moteur.

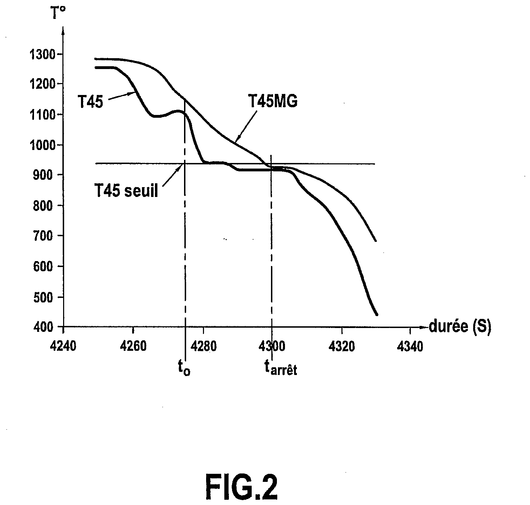

En liaison avec la figure 2, on décrira maintenant un exemple de mise en oeuvre des étapes E20 et E30 du procédé telles que décrites ci-dessus.

Dans cet exemple, le premier paramètre de fonctionnement du moteur est la température T45 mesurée dans un canal d'écoulement d'un flux gazeux entre deux étages de turbine du moteur et le second paramètre caractérisant un comportement thermique d'une pièce du moteur sujette à cokéfaction est une moyenne T45MG des valeurs de la température T45 mesurée sur une fenêtre temporelle glissante d'une durée prédéterminée.

La figure 2 représente des courbes de température en fonction du temps. Dans cet exemple, est représentée la courbe de la température T45 mesurée en continu. A partir de cette température T45, le calculateur du moteur calcule une valeur moyenne T45MG de la température sur une fenêtre glissante, correspondant par exemple ici aux 5 dernières mesures de température effectuée. La courbe de cette valeur moyenne T45MG est également représentée sur la figure 2 (cette valeur moyenne T45MG est calculée en permanence du démarrage à l'arrêt du moteur).

La valeur moyenne T45MG est alors comparée à une température de seuil T45seuil qui est ici constante sur toute la durée de la phase d'arrêt du moteur et qui est égale à environ 940°. Dès que la valeur moyenne T45MG devient inférieure à cette température de seuil T45seuil, ici à un temps t_{arrêt} environ égal à 4300 secondes environ, le calculateur du moteur envoie au pilote notification d'autorisation d'arrêt complet du moteur. Ainsi, la durée de stabilisation du moteur préalablement à son arrêt du moteur aura durée t_{arrêt}-t₀, soit environ 25 secondes, t₀ étant l'instant où le passage au régime ralenti a été détecté.

## Revendications

1. Procédé de notification d'une autorisation d'arrêt complet d'un moteur à turbine à gaz d'aéronef, comprenant, suite à la détection (E10) d'un passage du moteur à un régime de ralenti :
(a) une étape (E20) d'évaluation, à partir d'une valeur d'un premier paramètre de fonctionnement du moteur (T45), d'une valeur d'un second paramètre (T45MG) caractérisant un comportement thermique d'une pièce du moteur sujette à cokéfaction, cette évaluation étant réalisée au moyen d'un modèle de comportement thermique de ladite pièce ;
(b) une étape (E30) de comparaison de la valeur du second paramètre (T45MG) avec une valeur de seuil prédéfinie (T45seuil) correspondant à une valeur du second paramètre n'engendrant pas de cokéfaction de ladite pièce ; et
(c) une étape (E50) de notification d'autorisation d'arrêt complet du moteur si la valeur du second paramètre (T45MG) est inférieure à la valeur de seuil prédéfinie (T45seuil),
les étapes (a) à (c) étant réitérées sinon.

2. Procédé selon la revendication 1, dans lequel l'évaluation d'une valeur du second paramètre comprend le calcul d'une valeur moyenne du premier paramètre de fonctionnement du moteur sur une fenêtre temporelle glissante.

3. Procédé selon l'une des revendications 1 et 2, comprenant en outre :
le déclenchement (E20') d'un chronomètre (CM) suite à la détection d'un passage du moteur à un régime de ralenti ; et
la notification (E50) d'autorisation d'arrêt complet du moteur lorsque le temps écoulé depuis le déclenchement du chronomètre dépasse une durée de seuil prédéterminée.

4. Procédé selon l'une quelconque des revendications 1 à 3, dans lequel le premier paramètre est choisi parmi les paramètres de fonctionnement du moteur suivants : une température mesurée dans un canal d'écoulement d'un flux gazeux entre deux étages de turbine, une température ambiante mesurée à l'entrée du moteur, une température d'huile du moteur, une température de carburant du moteur, et un régime de fonctionnement du moteur.

5. Procédé selon l'une quelconque des revendications 1 à 4, dans lequel la notification d'autorisation d'arrêt complet du moteur consiste en un affichage visuel indiquant au pilote une ou plusieurs des informations suivantes : autorisation d'arrêt complet du moteur, arrêt complet du moteur avec risque de cokéfaction, affichage d'une durée d'attente nécessaire préalablement estimée avant autorisation d'arrêt complet du moteur.

6. Procédé selon l'une quelconque des revendications 1 à 5, dans lequel le passage du moteur à un régime de ralenti est détecté suite à l'actionnement par le pilote de l'aéronef d'un commutateur ou suite à la détection d'un régime de fonctionnement du moteur qui correspond à un régime de ralenti.

7. Programme d'ordinateur comportant des instructions pour l'exécution des étapes du procédé selon l'une quelconque des revendications 1 à 6 lorsque ledit programme est exécuté par un ordinateur.

8. Support d'enregistrement lisible par un ordinateur sur lequel est enregistré un programme d'ordinateur comprenant des instructions pour l'exécution des étapes du procédé selon l'une quelconque des revendications 1 à 6 lorsque ledit programme est exécuté par un ordinateur.

9. Moteur à turbine à gaz d'aéronef comprenant un dispositif de notification d'une autorisation d'arrêt complet d'un moteur à turbine à gaz d'aéronef, le dispositif comportant :
des moyens d'évaluation, à partir d'une valeur d'un premier paramètre de fonctionnement du moteur, d'une valeur d'un second paramètre caractérisant un comportement thermique d'une pièce du moteur sujette à cokéfaction, cette évaluation étant réalisée au moyen d'un modèle de comportement thermique de ladite pièce ;
des moyens de comparaison de la valeur du second paramètre avec une valeur de seuil prédéfinie correspondant à une valeur du second paramètre n'engendrant pas de cokéfaction de ladite pièce ; et
des moyens de notification d'autorisation d'arrêt complet du moteur.

## Patentansprüche

1. Verfahren zum Benachrichtigen über eine Erlaubnis zum vollständigen Abschalten eines Gasturbinentriebwerks eines Flugzeugs, das im Anschluss an das Erfassen (E10) eines Übergangs des Triebwerks zu einer Leerlaufdrehzahl umfasst:
(a) einen Schritt (E20) des Auswertens - anhand eines Wertes eines ersten Betriebsparameters des Triebwerks (T45) - eines Wertes eines zweiten Parameters (T45MG), der ein thermisches Verhalten eines einer Verkokung unterliegenden Teils des Triebwerks kennzeichnet, wobei diese Auswertung mittels eines Modells des thermischen Verhaltens des Teils durchgeführt wird,
(b) einen Schritt (E30) des Vergleichens des Wertes des zweiten Parameters (T45MG) mit einem vordefinierten Schwellwert (T45seuil), der einem Wert des zweiten Parameters entspricht, welcher keine Verkokung des Teils bewirkt, und
(c) einen Schritt (E50) des Benachrichtigens über eine Erlaubnis zum vollständigen Abschalten des Triebwerks, wenn der Wert des zweiten Parameters (T45MG) kleiner als der vordefinierte Schwellwert (T45seuil) ist,
wobei die Schritte (a) bis (c) andernfalls wiederholt werden.

2. Verfahren nach Anspruch 1, wobei das Auswerten eines Wertes des zweiten Parameters das Berechnen eines mittleren Wertes des ersten Betriebsparameters des Triebwerks über ein gleitendes Zeitfenster umfasst.

3. Verfahren nach einem der Ansprüche 1 und 2, ferner umfassend:
das Auslösen (E20') eines Zeitmessers (CM) im Anschluss an das Erfassen eines Übergangs des Triebwerks zu einer Leerlaufdrehzahl, und
die Benachrichtigung (E50) über eine Erlaubnis zum vollständigen Abschalten des Triebwerks, wenn die seit dem Auslösen des Zeitmessers verstrichene Zeit eine vorbestimmte Schwellendauer überschreitet.

4. Verfahren nach einem der Ansprüche 1 bis 3, wobei der erste Parameter aus den folgenden Betriebsparametern des Triebwerks ausgewählt ist: einer Temperatur, die in einem Strömungskanal eines Gasstroms zwischen zwei Turbinenstufen gemessen wird, einer Umgebungstemperatur, die am Einlass des Triebwerks gemessen wird, einer Öltemperatur des Triebwerks, einer Treibstofftemperatur des Triebwerks und einer Betriebsdrehzahl des Triebwerks.

5. Verfahren nach einem der Ansprüche 1 bis 4, wobei die Benachrichtigung über die Erlaubnis zum vollständigen Abschalten des Triebwerks aus einer Sichtanzeige besteht, die dem Piloten eine oder mehrere der folgenden Informationen anzeigt: Erlaubnis zum vollständigen Abschalten des Triebswerks, vollständiges Abschalten des Triebwerks mit der Gefahr einer Verkokung, Anzeige einer notwendigen Wartezeit, die zuvor vor der Erlaubnis zum vollständigen Abschalten des Triebwerks geschätzt wird.

6. Verfahren nach einem der Ansprüche 1 bis 5, wobei der Übergang des Triebwerks zu einer Leerlaufdrehzahl im Anschluss an die Betätigung eines Schalters durch den Piloten des Flugzeuges oder im Anschluss an das Erfassen einer Betriebsdrehzahl des Triebwerks, die einer Leerlaufdrehzahl entspricht, erfasst wird.

7. Computerprogramm, umfassend Befehle für die Durchführung der Schritte des Verfahrens nach einem der Ansprüche 1 bis 6, wenn das Programm durch einen Computer ausgeführt wird.

8. Durch einen Computer lesbarer Aufzeichnungsträger, auf dem ein Computerprogramm gespeichert ist, das Befehle für die Durchführung der Schritte des Verfahrens nach einem der Ansprüche 1 bis 6, wenn das Programm durch einen Computer ausgeführt wird, umfasst.

9. Flugszeuggasturbinentriebwerk mit einer Vorrichtung zur Benachrichtigung über eine Erlaubnis zum vollständigen Abschalten eines Flugzeuggasturbinentriebwerks, wobei die Vorrichtung umfasst:
Mittel zum Auswerten - anhand eines Wertes eines ersten Betriebsparameters des Triebwerks - eines Wertes eines zweiten Parameters, der ein thermisches Verhalten eines einer Verkokung unterliegenden Teils des Triebwerks kennzeichnet, wobei diese Auswertung mittels eines Modells des thermischen Verhaltens des Teils durchgeführt wird,
Mittel zum Vergleichen des Wertes des zweiten Parameters mit einem vordefinierten Schwellwert, der einem Wert des zweiten Parameters entspricht, welcher keine Verkokung des Teils bewirkt, und
Mittel zur Benachrichtigung über eine Erlaubnis zum vollständigen Abschalten des Triebwerks.

## Claims

1. A method of notifying an authorization to shut down completely an aircraft gas turbine engine, the method being applied after detecting (E10) that the engine has passed to an idling speed, and comprising:
a) an evaluation step (E20) of using a value of a first operating parameter of the engine (T45) to evaluate a value for a second parameter (T45MG) characterizing a thermal behavior of a part of the engine that might be subjected to coking, this evaluation being performed by means of a thermal behavior model for said part;
b) a comparison step (E30) of comparing the value of the second parameter (T45MG) with a predefined threshold value (T45thresh) corresponding to a value of the second parameter that does not lead to coking of said part; and
c) a notification step (E50) of notifying authorization to shut down the engine completely if the value of the second parameter (T45MG) is lower than the value of the predefined threshold (T45thresh);
else reiterating steps a) to c).

2. A method according to claim 1, wherein a value for the second parameter is evaluated by calculating a mean value of the first operating parameter of the engine over a moving time window.

3. A method according to claim 1 or claim 2, further comprising:
triggering (E20') a timer (CM) on detecting that the engine has passed to an idling speed; and
notifying (E50) authorization to shut down the engine completely when the time that has elapsed since triggering the timer exceeds a predetermined threshold duration.

4. A method according to any one of claims 1 to 3, wherein the first parameter is selected from the following operating parameters of the engine: a temperature measured in a flow channel for a gas stream between two turbine stages; an ambient temperature measured at the inlet of the engine; an oil temperature of the engine; a fuel temperature of the engine; and an operating speed of the engine.

5. A method according to any one of claims 1 to 4, wherein the notification authorizing complete shutdown of the engine consists in a visual display informing the pilot of one or more of the following items:
authorization to shut down the engine completely;
complete shutdown of the engine without risk of coking;
displaying a previously estimated waiting duration necessary prior to authorizing complete shutdown of the engine.

6. A method according to any one of claims 1 to 5, wherein the passage of the engine to an idling speed is detected as a result of the pilot of the aircraft actuating a switch or as a result of detecting an operating speed of the engine that corresponds to an idling speed.

7. A computer program including instructions for executing steps of the method according to any one of claims 1 to 6 when said program is executed by a computer.

8. A computer readable data medium storing a computer program including instructions for executing steps of the method according to any one of claims 1 to 6 when said program is executed on a computer.

9. An aircraft gas turbine engine including a device for notifying authorization to shut down completely an aircraft gas turbine engine, the device comprising:
evaluation means for using a value of a first operating parameter of the engine to evaluate a value for a second parameter characterizing a thermal behavior of a part of the engine that might be subjected to coking, this evaluation being performed by means of a thermal behavior model for said part;
comparator means for comparing the value of the second parameter with a predefined threshold value corresponding to a value of the second parameter that does not lead to coking of said part; and
notification means for notifying authorization to shut down the engine completely.
